# EUROPEAN PATENT SPECIFICATION

(11) **EP 3 962 042 B1**
(45) Date of publication and mention of the grant of the patent: **17.04.2024**
(21) Application number: 21192112.7
(22) Date of filing: 19.08.2021
(51) Int. Cl.: H04L 69/16, H04L 67/50

(54) **METHOD AND SYSTEM FOR DETERMINING AN EVENT REPEATEDLY CONDUCTED IN A COMPUTER NETWORK, AND COMPUTER PROGRAM PRODUCT**
VERFAHREN UND SYSTEM ZUR BESTIMMUNG EINES EREIGNISSES, DAS IN EINEM COMPUTERNETZWERK WIEDERHOLT AUSGEFÜHRT WIRD, UND COMPUTERPROGRAMMPRODUKT
PROCÉDÉ ET SYSTÈME PERMETTANT DE DÉTERMINER UN ÉVÉNEMENT DE MANIÈRE RÉPÉTÉE RÉALISÉ DANS UN RÉSEAU INFORMATIQUE, ET PRODUIT-PROGRAMME INFORMATIQUE

(30) Priority: 21.08.2020 EP 20192270
(43) Date of publication of application: 02.03.2022
(73) Proprietor: Meetrics GmbH, 10178 Berlin (DE)
(72) Inventor: Schumacher, Hendrik, 10178 Berlin (DE)
(74) Representative: Bittner, Thomas L.

(56) References cited:
- EP-A1- 2 458 506
- FIELDING R ET AL: "Hypertext Transfer Protocol (HTTP/1.1): Conditional Requests; rfc7232.txt", HYPERTEXT TRANSFER PROTOCOL (HTTP/1.1): CONDITIONAL REQUESTS; RFC7232.TXT, INTERNET ENGINEERING TASK FORCE, IETF; STANDARD, INTERNET SOCIETY (ISOC) 4, RUE DES FALAISES CH- 1205 GENEVA, SWITZERLAND, 7 June 2014 (2014-06-07), pages 1-28, XP015100689, [retrieved on 2014-06-07]

## Description

The present disclosure refers to a method and system for determining an event repeatedly conducted in a computer network, and computer program product.

### Background

Several use cases in the internet or some other computer network require tracking how many times a certain event has happened or has been conducted (event count) on a certain device (computer browser, mobile device, connected TV etc.).

Traditionally, such tracking is done by assigning a unique ID (identification) to the device and storing on a server how many times the event has been recorded in combination with this unique ID. Since assigning a unique ID also allows tracking the user (i.e. collecting information about different events that have been recorded for this unique ID) getting this unique ID consistently has become harder and harder. Legal and technical requirements increasingly make it difficult to have unique IDs associated consistently with most of the devices.

Another option is storing the event using cookies. Since Cookies also allow storing a unique ID they have become less reliable. Storing a Cookie is restricted heavily by browser technology and actually not possible anymore in many cases. While Cookies can still be used in First-Party-Situations e.g. when a user visits a website and this website wants to store information about this user, Cookies are not a scalable solution anymore for Third-Party-Situations e.g. when information is processed for marketing or advertising reasons or for measures against fraudulent actions.

Given valid legal reasons (like consent or legitimate interest), storing an event count for a device has become a technical problem because of the limitations put into place against user tracking.

The document R. Fielding et al., Hypertext Transfer Protocol (HTTP/1.1): Conditional Requests, RfC 7232, pertains to the Hypertext Transfer Protocol being a stateless application level protocol for distributed, collaborative, hypertext information systems. HTTP/1.1 conditional requests are defined, including metadata header fields for indicating state changes, request header fields for making preconditions on such state, and rules for constructing the responses to a conditional request when one or more preconditions are evaluated as false.

In document EP 2 458 506 A1, systems and methods for management of a cache are disclosed. Access counts are stored in file system metadata associated with files in the cache. By encoding access counts in the file system metadata, file I/O operations are reduced. A reference count may be encoded in an access count timestamp in the file system metadata.

### Summary

It is an object of the present disclosure to provide a method and a system allowing for reliably and efficiently determining information about an event repeatedly conducted in a computer network, such as retrieving data from a network resource.

According to an aspect, a method for determining an event repeatedly conducted or performed in a computer network is provided, the method comprising: providing a computer network having a client device and a server device; receiving a first request for request data in the server device, wherein the first request comprises a network address indicative of a network resource configured to provide the request data in response to a request for the request data and a location of the network resource in the computer network; in response to receiving the first request, providing first response data in the server device, wherein the first response data comprise time stamp data indicative of one or more time stamp parameters selected from the following group: year, month, day, hour, minute, second, and a fraction of a second, at least one time stamp parameter is replaced by a counting parameter, and the counting parameter is assigned an initial value; receiving the first response data in the client device from the server device; receiving a second request for the request data in the server device, wherein the second request comprises the network address indicative of the network resource configured to provide the request data and the location of the network resource in the computer network, and the first time stamp data with at least one time stamp parameter assigned the initial value; in response to receiving the second request, providing second response data in the server device, wherein the second response data comprise the second time stamp data with the at least one time stamp parameter assigned the initial value being adjusted to a first counting value; receiving the second response data in the client device from the server device; and determining event counting information from the first counted value, the event counting information being indicative of an event frequency of requesting the request data.

According to another aspect, a system for determining an event repeatedly conducted in a computer network having a client device and a server device is provided, wherein one or more processors provided for the client device and the server device are configured to: receive a first request for request data in the server device, wherein the first request comprises a network address indicative of a network resource configured to provide the request data in response to a request for the request data and a location of the network resource in the computer network; in response to receiving the first request, provide first response data in the server device, wherein the first response data comprise time stamp data indicative of one or more time stamp parameters selected from the following group: year, month, day, hour, minute, second, and a fraction of a second, at least one time stamp parameter is replaced by a counting parameter, and the counting parameter is assigned an initial value; receive the first response data in the client device from the server device; receive a second request for the request data in the server device, wherein the second request comprises the network address indicative of the network resource configured to provide the request data and the location of the network resource in the computer network, and the first time stamp data with at least one time stamp parameter assigned the initial value; in response to receiving the second request, provide second response data in the server device, wherein the second response data comprise the second time stamp data with the at least one time stamp parameter assigned the initial value being adjusted to a first counting; receive the second response data in the client device from the server device; and determining event counting information from the first counted value, the event counting information being indicative of an event frequency of requesting the request data.

Further requests for the request data may be received in the server device. Each time such request is received there will be adjusting of the value, thereby, counting how often there is request for the (same) request data. The request data may refer to some website content, for example. In general, the response data may comprise at least one of audio data, video data, image data, and text data.

The counting parameter replacing the at least one time stamp parameter may be stored in a memory not only on the client side, but optionally also on the server side. Thus, data indicative of the counting parameter (values) may be provided in at least one of the client device and the server device. With respect to the server device, the data indicative of the counting parameter (values) may be processed by data processing for a statistical analysis with respect to the event repeatedly conducted or performed in the computer network.

In an embodiment, the following may be provided: Counting events for different request data assigned a different network address indicative of a different network resource configured to provide the different request data in response to a request for the different request data and a different location of the different network resource in the computer network.

The network address may be a Unified Resource Locator (URL). Events may be counted or tracked for requesting or downloading request data assigned to one and the same URL
The event frequency may be indicative of at least one a number of requesting the request data and a frequency of requesting the request data per unit of time.

The first response data may further comprise a first cache memory control command configured to enforce first cache control in the client device, the first cache control forcing the client device to send the second request for the request data to the server device in response to receiving an inquiry for the request data in the client device. Even if the client device has cached the request data before in response to the first request, because of the first cache control mode, the second request will be submitted to the server device.

The first response data may further comprise a second cache memory control command configured to enforce second cache control, the second cache control enforcing, with respect to the first response data and the second response data, caching in the client device only and preventing caching in another network device of the computer network being different from the client device.

The method may further comprise: running a browser application on the client device; receiving the first response data in the browser application; and receiving the second response data in the browser application. Caching of the first and second response data may be conducted by storing in a browser cache. The first and second request may be provided by the browser application.

In embodiment, more or less parts of the timestamp can be used for storing the event count. Thus the time period the event count is collected over can be changed (by using just the <second> part the event count can be collected for the current minute but will be capped when it reaches 59). To make the time period bigger the <day> and <month> parts can also be used to store the event count (in this case the stored value has to be modified to still create a valid timestamp, i.e. starting at 1 for the <day> part and using month abbreviations for the <month> part).

In another alternative embodiment, different event counts can be collected for one device by using different resource location names. Each network resource will be stored separately in the browser cache with the corresponding timestamp. By using the same or a different resource location name the solution can control if something should be counted as the same or a different event.

In yet another alternative embodiment, the server device can return the current event count in the response content to the client device. Without this variation it would only be possible to aggregate the event count values on the server device by storing the current event count for each request. It is not possible to directly retrieve the timestamp from the browser cache on the client device. On the server device this is already useful since it allows to get statistics how often each event happened in a certain time period over all devices of the computer network. By returning the event count in the response content it will also be possible to make decisions on the device based on this event count. A script running in a browser could determine how often an event has happened, e.g. how often a user tried to login on a website, how often the user clicked on some offering, how often the user saw a certain advertisement.

In yet another variation, other values also stored along with a cached response in the browser cache may be used to store an event count. One possible header would be the so called E-Tag that is also used to identify if a cached resource has been changed. All values that are stored in the browser cache and sent back to the server in a subsequent response can be used for implementing this solution.

In an embodiment, when answering the request by a browser running on the client device the server device can send the "Last-Modified" header to tell the browser when the response content (request data) returned to the browser was actually modified last. In combination with the "cache-control" set to "private, no-cache, must-revalidate" the server device can indicate to the actual end-user browser ("private") to store the response data in the browser cache and re-use the response / requested data for later requests to the same resource location if the network resource has not changed ("must-revalidate"). In this case the browser may store the response content (requested data) in the browser cache along with the value of the "Last-Modified" header. To find out if the network resource has changed if the network resource is needed again later, the browser (on the client device) will send the same request but add a "If-Modified-Since" header that will include the timestamp from the "Last-Modified" header in the first request. The server device can then compare the timestamp and either tell the browser on the client device to use the cached resource (request data) if it has not changed or return the changed resource if a change has happened.

### Further embodiments

Following, further embodiments are described. Reference is made to figures. In the figures show:
- Fig. 1: a schematic representation of a computer network comprising with a client device and an a sever device; and
- Fig. 2: a schematic representation for a method for determining an event repeatedly conducted in the computer network.

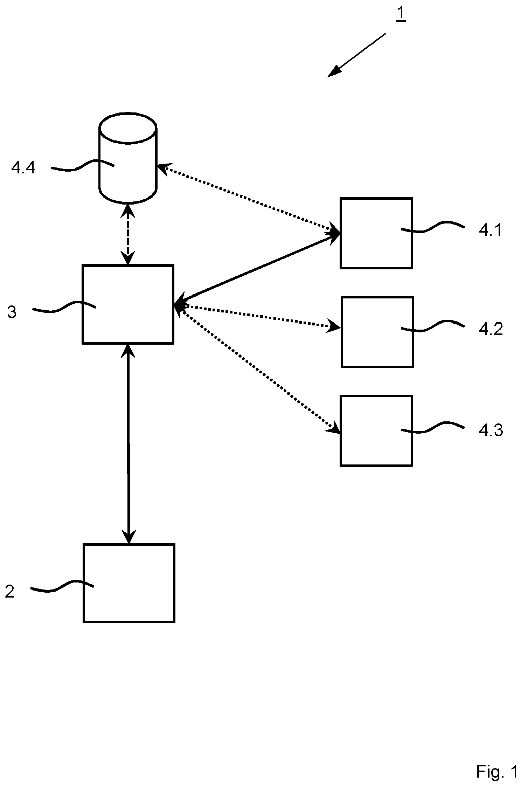

Fig. 1 shows a schematic representation of a computer network 1 comprising a client device 2 and a sever device 3. A plurality of network resources 4.1, ..., 4.4 are depicted which are configured to provide (request) data in response to a request which may be received in the server device 3 from the client device 2. In an alternative embodiment the client device 2 and / or the sever device 3 may provide for or act as a network resource each. In such embodiment the client device 2 and / or the sever device 3 may be provided by one of the network resources 4.1, ..., 4.4.

Data stored in at least one of the client device 2, the sever device 3, and the plurality of network resources 4.1, ..., 4.4 are assigned a network address allowing accessing the request data, for example, for downloading or retrieving the request data indicated by a request received in the server device.

In case request data are retrieved an event count is stored in a browser cache of a browser running in the client device 2 utilizing timestamp headers. Since it is not possible to store a unique ID in a timestamp (since there are not enough digits that would achieve high enough entropy) browser vendors may possibly not take action against this method of event counting or observing. Furthermore, taking action against this method is not that easy because it can be hard to detect if the timestamp is used to store an event count and the browser caching logic used is very basic and essential for today's internet.

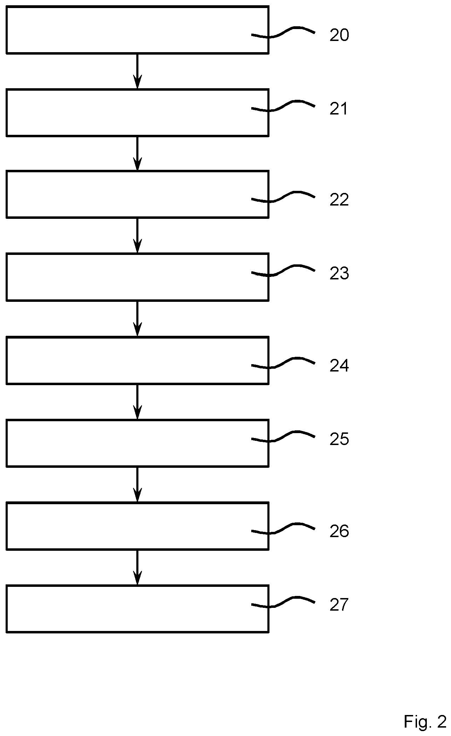

Referring to Fig. 2, an embodiment for a method for determining an event repeatedly conducted in the computer network 1 is described. After providing the computer network 1 having the client device 2 and the server device 3 in step 20, a first request for request data is received in the server device 3 in step 21, wherein the first request comprises a network address indicative of a network resource configured to provide the request data in response to a request for the request data and a location of the network resource in the computer network 1. In response to receiving the first request, in step 22 first response data are provided in the server device 3, wherein the first response data comprise time stamp data indicative of one or more time stamp parameters selected from the following group: year, month, day, hour, minute, second, and a fraction of a second. At least one time stamp parameter is replaced by a counting parameter, and the counting parameter is assigned an initial value (step 23). The first response data is received in the client device 2 from the server device 3 in step 24.

At a later point in time, a second request for the (same) request data is received in the server device 3, wherein the second request comprises the network address indicative of the network resource configured to provide the request data and the location of the network resource in the computer network 1, and the first time stamp data with at least one time stamp parameter assigned the initial value. In response to receiving the second request, in step 25 second response data is received in the server device 3, wherein the second response data comprise the second time stamp data with the at least one time stamp parameter assigned the initial value being incremented to a first incremented value. The second response data is received in the client device 2 from the server device 3 (step 26). Event counting information is determined from the first incremented value in step 27, the event counting information being indicative of an event frequency of requesting the request data.

HTTP headers which may be used are called "Last-Modified" and "If-Modified-Since" (see RFC 7232, https://tools.ietf.org/html/rfc7232#section-3.3). When answering a request by a browser running on the client device 2 a HTTP server (such as server device 3) can send the "Last-Modified" header to tell the browser when the response content returned to the browser was actually modified last. In combination with the "cache-control" set to "private, no-cache, must-revalidate" the server device 3 can tell the actual end-user browser ("private") to store the response in the browser cache and re-use the response for later requests to the same resource location if the resource has not changed ("must-revalidate"). In this case the browser will store the response content in the browser cache along with the value of the "Last-Modified" header. To find out if the network resource has changed if the network resource is needed again later, the browser (on the client device 2) will send the same request but add a "If-Modified-Since" header that will include the timestamp from the "Last-Modified" header in the first request. The server device 3 can then compare the timestamp and either tell the browser to use the cached resource if it has not changed or return the changed resource if a change has happened.

The technique proposed may comprise storing an event count in parts of the timestamp. The format of the timestamp, for example, looks as follows:
<day-name>, <day> <month> <year> <hour>:<minute>:<second> GMT

On the first request, the server device 3 will take the current timestamp but remove the <second> part or more parts like <minute> and <hour> and replace them by zeros and a one in the <second> part. On the next request, the server device 3 will again receive this timestamp, determine the current event count from the <second>, <minute> and <hour>, increment the event count and return a "changed" resource with a new timestamp that contains the new event count.

### Example:

First request contains no relevant header

### First response contains:

Cache-Control: private, no-cache, must-revalidate
Last-Modified: Thu, 23 Jul 2020 00:00:01 GMT

### Second response contains:

If-Modified-Since: Thu, 23 Jul 2020 00:00:01 GMT
Cache-Control: private, no-cache, must-revalidate
Last-Modified: Thu, 23 Jul 2020 00:00:02 GMT

When the <second> part reaches 59 in this case the server will continue by incrementing the <minute> part and resetting the <second> part to 0.

### Example:

60th request contains:
   If-Modified-Since: Thu, 23 Jul 2020 00:00:59 GMT
60th response contains:
   Cache-Control: private, no-cache, must-revalidate
   Last-Modified: Thu, 23 Jul 2020 00:01:00 GMT

In an alternative embodiment, the event count can be reset whenever the timestamp without <hour>, <minute> and <second> changes (in the previous example when July 23 has gone by). Thus it is possible to determine the time period the event count is recorded for.

In another alternative embodiment, more or less parts of the timestamp can be used for storing the event count. Thus the time period the event count is collected over can be changed (by using just the <second> part the event count can be collected for the current minute but will be capped when it reaches 59). To make the time period bigger the <day> and <month> parts can also be used to store the event count (in this case the stored value has to be modified to still create a valid timestamp, i.e. starting at 1 for the <day> part and using month abbreviations for the <month> part).

In still another alternative embodiment, different event counts can be collected for one device by using different resource location names. Each resource will be stored separately in the browser cache with the corresponding timestamp. By using the same or a different resource location name the solution can control if something should be counted as the same or a different event.

In yet another alternative embodiment, the server device 3 can return the current event count (counting information) in the response content to the client device 2. Otherwise it would only be possible to aggregate the event count values on the server device 3 by storing the current event count for each request. It ma y not be possible to directly retrieve the timestamp from the browser cache on the client device 2. On the server device 3 this is already useful since it allows to determine statistics how often an event happened in a certain time period over all devices of the computer network 1. By returning the event count in the response content it will also be possible to make decisions on the device based on this event count. A script running in a browser could determine how often an event has happened, e.g. how often a user tried to login on a website, how often the user clicked on some offering, how often the user saw a certain advertisement.

In yet another variation, other values also stored along with a cached response in the browser cache may be used to store an event count. One possible header would be the so called E-Tag that is also used to identify if a cached resource has been changed. All values that are stored in the browser cache and sent back to the server in a subsequent response can be used for implementing this solution.

The claims may be material for the realization of various embodiments.

## Claims

1. A method for determining an event repeatedly conducted in a computer network (1), comprising
- providing a computer network (1) having a client device (2) and a server device (3);
- receiving a first request for request data in the server device (3), wherein the first request comprises a network address indicative of a network resource configured to provide the request data in response to a request for the request data and a location of the network resource in the computer network (1);
- in response to receiving the first request, providing first response data in the server device (3), wherein
- the first response data comprise time stamp data indicative of one or more time stamp parameters selected from the following group: year, month, day, hour, minute, second, and a fraction of a second,
- at least one time stamp parameter is replaced by a counting parameter, and
- the counting parameter is assigned an initial value;
- receiving the first response data in the client device (2) from the server device (3);
- receiving a second request for the request data in the server device (3), wherein the second request comprises the network address indicative of the network resource configured to provide the request data and the location of the network resource in the computer network (1), and the first time stamp data with the at least one time stamp parameter assigned the initial value;
- in response to receiving the second request, providing second response data in the server device (3), wherein the second response data comprise second time stamp data with the at least one time stamp parameter assigned the initial value being adjusted to a first counting value;
- receiving the second response data in the client device (2) from the server device (3); and
- determining event counting information from the first counting value, the event counting information being indicative of an event frequency of requesting the request data.

2. Method of claims 1, wherein the network address is a Unified Resource Locator.

3. Method of claims 1 or 2, wherein the event frequency is indicative of at least one a number of requesting the request data and a frequency of requesting the request data per unit of time.

4. Method of at least one of the preceding claims, wherein the first response data further comprise a first cache memory control command configured to enforce first cache control in the client device (2), the first cache control forcing the client device (2) to send the second request for the request data to the server device (3) in response to receiving an inquiry for the request data in the client device (2).

5. Method of at least one of the preceding claims, wherein the first response data further comprise a second cache memory control command configured to enforce second cache control, the second cache control enforcing, with respect to the first response data and the second response data, caching in the client device (2) only and preventing caching in another network device of the computer network (1) being different from the client device (2).

6. Method of at least one of the preceding claims, further comprising
- running a browser application on the client device (2);
- receiving the first response data in the browser application; and
- receiving the second response data in the browser application.

7. A system for determining an event repeatedly conducted in a computer network (1) having a client device (2) and a server device (3), wherein one or more processors provided for the client device (2) and the server device (3) are configured to:
- receive a first request for request data in the server device (3), wherein the first request comprises a network address indicative of a network resource configured to provide the request data in response to a request for the request data and a location of the network resource in the computer network (1);
- in response to receiving the first request, provide first response data in the server device (3), wherein
- the first response data comprise time stamp data indicative of one or more time stamp parameters selected from the following group: year, month, day, hour, minute, second, and a fraction of a second,
- at least one time stamp parameter is replaced by a counting parameter, and
- the counting parameter is assigned an initial value;
- receive the first response data in the client device (2) from the server device (3);
- receive a second request for the request data in the server device (3), wherein the second request comprises the network address indicative of the network resource configured to provide the request data and the location of the network resource in the computer network (1), and the first time stamp data with the at least one time stamp parameter assigned the initial value;
- in response to receiving the second request, provide second response data in the server device (3), wherein the second response data comprise second time stamp data with the at least one time stamp parameter assigned the initial value being adjusted to a first counting value;
- receive the second response data in the client device (2) from the server device (3); and
- determining event counting information from the first counting value, the event counting information being indicative of an event frequency of requesting the request data.

8. A computer program comprising instructions which, when the program is executed by a computer, cause the computer to carry out the method of claim of one of the claims 1 to 6.

## Patentansprüche

1. Verfahren zur Bestimmung eines Ereignisses, das wiederholt in einem Computernetzwerk (1) ausgeführt wird, umfassend
- Bereitstellen eines Computernetzwerks (1) mit einem Client-Gerät (2) und einem Server-Gerät (3);
- Empfangen einer ersten Anforderung von Anforderungsdaten in dem Server-Gerät (3), die erste Anforderung umfassend eine Netzwerkadresse, die eine Netzwerkressource anzeigt, die eingerichtet ist, die Anforderungsdaten in Reaktion auf eine Anforderung der Anforderungsdaten bereitzustellen und einen Standort der Netzwerkressource in dem Computernetzwerk (1);
- in Reaktion auf den Empfang der ersten Anforderung, Bereitstellen erster Antwortdaten in dem Server-Gerät (3), wobei
- die ersten Antwortdaten Zeitstempeldaten umfassen, die einen oder mehrere Zeitstempelparameter anzeigen, die aus der folgenden Gruppe ausgewählt sind: Jahr, Monat, Tag, Stunde, Minute, Sekunde, und ein Bruchteil einer Sekunde,
- mindestens ein Zeitstempelparameter durch einen Zählparameter ersetzt wird, und
- dem Zählparameter ein Anfangswert zugewiesen wird;
- Empfangen der ersten Antwortdaten in dem Client-Gerät (2) von dem Server-Gerät (3);
- Empfangen einer zweiten Anforderung der Anforderungsdaten in dem Server-Gerät (3), die zweite Anforderung umfassend die Netzwerkadresse, die die Netzwerkressource anzeigt, die eingerichtet ist, die Anforderungsdaten bereitzustellen und den Standort der Netzwerkressource in dem Computernetzwerk (1), und die ersten Zeitstempeldaten, wobei dem mindestens einen Zeitstempelparameter der Anfangswert zugewiesen wird;
- als Reaktion auf den Empfang der zweiten Anforderung, Bereitstellen zweiter Antwortdaten in den Server-Gerät (3), wobei die zweiten Antwortdaten zweite Zeitstempeldaten umfassen, wobei der mindestens eine Zeitstempelparameter, dem der Anfangswert zugewiesen ist, auf einen ersten Zählwert eingestellt wird;
- Empfangen der zweiten Antwortdaten in dem Client-Gerät (2) von dem Server-Gerät (3); und
- Bestimmen von Ereigniszählinformationen aus dem ersten Zählwert, wobei die Ereigniszählinformationen eine Ereignishäufigkeit des Anforderns der Anforderungsdaten anzeigen.

2. Verfahren nach Anspruch 1, wobei die Netzwerkadresse eine URL (Unified Resource Locator) ist.

3. Verfahren nach Anspruch 1 oder 2, wobei die Ereignishäufigkeit mindestens eine Anzahl von Anforderungen der Anforderungsdaten und eine Häufigkeit der Anforderung der Anforderungsdaten pro Zeiteinheit angibt.

4. Verfahren nach mindestens einem der vorhergehenden Ansprüche, wobei die ersten Antwortdaten ferner einen ersten Cache-Speicher-Steuerungsbefehl umfassen, der geeignet ist, eine erste Cache-Steuerung in dem Client-Gerät (2) zu erzwingen, wobei die erste Cache-Steuerung das Client-Gerät (2) dazu zwingt, die zweite Anforderung von Anforderungsdaten an das Server-Gerät (3) zu senden als Reaktion auf den Empfang einer Anfrage nach den Anforderungsdaten in dem Client-Gerät (2).

5. Verfahren nach mindestens einem der vorhergehenden Ansprüche, wobei die ersten Antwortdaten ferner einen zweiten Cache-Speicher-Steuerungsbefehl umfassen, der geeignet ist, eine zweite Cache-Steuerung zu erzwingen, wobei die zweite Cache-Steuerung in Bezug auf die ersten Antwortdaten und die zweiten Antwortdaten eine Zwischenspeicherung nur in dem Client-Gerät (2) erzwingt, und eine Zwischenspeicherung in einem anderen Netzwerk-Gerät des Computernetzwerks (1), das sich von dem Client-Gerät (2) unterscheidet, verhindert.

6. Verfahren nach mindestens einem der vorhergehenden Ansprüche, ferner umfassend
- Ausführen einer Browseranwendung auf dem Client-Gerät (2);
- Empfangen der ersten Antwortdaten in der Browseranwendung; und
- Empfangen der zweiten Antwortdaten in der Browseranwendung.

7. System zur Bestimmung eines Ereignisses, das wiederholt in einem Computernetzwerk (1) mit einem Client-Gerät (2) und einem Server-Gerät (3) ausgeführt wird, wobei einer oder mehrere Prozessoren, die für das Client-Gerät (2) und das Server-Gerät (3) vorgesehen sind, geeignet sind zum:
- Empfangen einer ersten Anforderung von Anforderungsdaten in dem Server-Gerät (3), die erste Anforderung umfassend eine Netzwerkadresse, die eine Netzwerkressource anzeigt, die eingerichtet ist, die Anforderungsdaten in Reaktion auf eine Anforderung der Anforderungsdaten bereitzustellen und einen Standort der Netzwerkressource in dem Computernetzwerk (1);
- in Reaktion auf den Empfang der ersten Anforderung, Bereitstellen erster Antwortdaten in dem Server-Gerät (3), wobei
- die ersten Antwortdaten Zeitstempeldaten umfassen, die einen oder mehrere Zeitstempelparameter anzeigen, die aus der folgenden Gruppe ausgewählt sind: Jahr, Monat, Tag, Stunde, Minute, Sekunde, und ein Bruchteil einer Sekunde,
- mindestens ein Zeitstempelparameter durch einen Zählparameter ersetzt wird, und
- dem Zählparameter ein Anfangswert zugewiesen wird;
- Empfangen der ersten Antwortdaten in dem Client-Gerät (2) von dem Server-Gerät (3);
- Empfangen einer zweiten Anforderung der Anforderungsdaten in dem Server-Gerät (3), die zweite Anforderung umfassend die Netzwerkadresse, die die Netzwerkressource anzeigt, die eingerichtet ist, die Anforderungsdaten bereitzustellen und den Standort der Netzwerkressource in dem Computernetzwerk (1), und die ersten Zeitstempeldaten, wobei dem mindestens einen Zeitstempelparameter der Anfangswert zugewiesen wird;
- in Reaktion auf den Empfang der zweiten Anforderung, Bereitstellen zweiter Antwortdaten in dem Server-Gerät (3), wobei die zweiten Antwortdaten zweite Zeitstempeldaten umfassen, wobei der mindestens eine Zeitstempelparameter, dem der Anfangswert zugewiesen ist, auf einen ersten Zählwert eingestellt wird;
- Empfangen der zweiten Antwortdaten in dem Client-Gerät (2) von dem Server-Gerät (3); und
- Bestimmen von Ereigniszählinformationen aus dem ersten Zählwert, wobei die Ereigniszählinformationen eine Ereignishäufigkeit des Anforderns der Anforderungsdaten anzeigen.

8. Computerprogramm, das Anweisungen umfasst, die, wenn das Programm von einem Computer ausgeführt wird, den Computer veranlassen, das Verfahren nach einem der Ansprüche 1 bis 6 auszuführen.

## Revendications

1. Procédé pour déterminer un événement effectué de manière répétée dans un réseau informatique (1), comprenant de
- fournir un réseau informatique (1) ayant un dispositif client (2) et un dispositif de serveur (3) ;
- recevoir une première demande de données de demande dans le dispositif de serveur (3), dans lequel la première demande comprend une adresse de réseau indicative d'une ressource de réseau configurée pour fournir les données de demande en réponse à une demande de données de demande et un emplacement de la ressource de réseau dans le réseau informatique (1) ;
- en réponse à la réception de la première demande, fournir des premières données de réponse dans le dispositif de serveur (3), dans lequel
- les premières données de réponse comprennent des données de pointeur temporel indiquant un ou plusieurs paramètres de pointeur temporel sélectionnés dans le groupe suivant : année, mois, jour, heure, minute, seconde et fraction de seconde,
- au moins un paramètre de pointeur temporel est remplacé par un paramètre de comptage, et
- le paramètre de comptage se voit attribuer une valeur initiale ;
- recevoir les premières données de réponse dans le dispositif client (2) en provenance du dispositif de serveur (3) ;
- recevoir une deuxième demande pour les données de demande dans le dispositif de serveur (3), dans lequel la deuxième demande comprend l'adresse de réseau indicative de la ressource de réseau configurée pour fournir les données de demande et l'emplacement de la ressource réseau dans le réseau informatique (1), et les premières données de pointeur temporel avec au moins un paramètre de pointeur temporel attribué à la valeur initiale ;
- en réponse à la réception de la deuxième demande, fournir des deuxièmes données de réponse dans le dispositif de serveur (3), dans lequel les deuxièmes données de réponse comprennent des deuxièmes données de pointeur temporel avec le au moins un paramètre de pointeur temporel attribué à la valeur initiale étant ajusté à une première valeur de comptage ;
- recevoir les deuxièmes données de réponse dans le dispositif client (2) en provenance du dispositif de serveur (3); et
- déterminer des informations de comptage d'événements à partir de la première valeur de comptage, les informations de comptage d'événements étant indicatives d'une fréquence d'événements de demande de données de demande.

2. Procédé selon la revendication 1, dans lequel l'adresse de réseau est un localisateur de ressources unifié.

3. Procédé selon la revendication 1 ou 2, dans lequel la fréquence des événements indique au moins un nombre de demandes de données de demande et une fréquence de demandes de données de demande par unité de temps.

4. Procédé selon au moins une des revendications précédentes, dans lequel les premières données de réponse comprennent en outre une première commande de contrôle de mémoire cache configurée pour imposer un premier contrôle de mémoire cache dans le dispositif client (2), le premier contrôle de cache forçant le dispositif client (2) pour envoyer la deuxième demande de données de demande au dispositif de serveur (3) en réponse à la réception d'une demande de données de demande dans le dispositif client (2).

5. Procédé selon au moins une des revendications précédentes, dans lequel les premières données de réponse comprennent en outre une deuxième commande de contrôle de mémoire cache configurée pour imposer un deuxième contrôle de mémoire cache, le deuxième contrôle de mémoire cache imposant, par rapport aux premières données de réponse et aux deuxièmes données de réponse, de mettre en mémoire cache dans le dispositif client (2) uniquement et empêchant la mise en mémoire cache dans un autre dispositif de réseau du réseau informatique (1) différent du dispositif client (2).

6. Procédé selon au moins une des revendications précédentes, comprenant en outre de
- exécuter une application de navigateur sur le dispositif client (2) ;
- recevoir les premières données de réponse dans l'application de navigateur ; et
- recevoir les deuxièmes données de réponse dans l'application de navigateur.

7. Système pour déterminer un événement effectué de manière répétée dans un réseau informatique (1) comportant un dispositif client (2) et un dispositif de serveur (3), dans lequel un ou plusieurs processeurs prévus pour le dispositif client (2) et le dispositif de serveur (3) sont configurés pour :
- recevoir une première demande de données de demande dans le dispositif de serveur (3), dans lequel la première demande comprend une adresse de réseau indicative d'une ressource de réseau configurée pour fournir les données de demande en réponse à une demande de données de demande et un emplacement de la ressource de réseau dans le réseau informatique (1) ;
- en réponse à la réception de la première demande, fournir des premières données de réponse dans le dispositif de serveur (3), dans lequel
- les premières données de réponse comprennent des données de pointeur temporel indiquant un ou plusieurs paramètres de pointeur temporel sélectionnés dans le groupe suivant : année, mois, jour, heure, minute, seconde et fraction de seconde,
- au moins un paramètre de pointeur temporel est remplacé par un paramètre de comptage, et
- le paramètre de comptage se voit attribuer une valeur initiale ;
- recevoir les premières données de réponse dans le dispositif client (2) en provenance du dispositif de serveur (3) ;
- recevoir une deuxième demande pour les données de demande dans le dispositif de serveur (3), dans lequel la deuxième demande comprend l'adresse de réseau indicative de la ressource de réseau configurée pour fournir les données de demande et l'emplacement de la ressource réseau dans le réseau informatique (1), et les premières données de pointeur temporel avec au moins un paramètre de pointeur temporel attribué à la valeur initiale ;
- en réponse à la réception de la deuxième demande, fournir des deuxièmes données de réponse dans le dispositif de serveur (3), dans lequel les deuxièmes données de réponse comprennent des deuxièmes données de pointeur temporel avec le au moins un paramètre de pointeur temporel attribué à la valeur initiale étant ajusté à une première valeur de comptage ;
- recevoir les deuxièmes données de réponse dans le dispositif de client (2) en provenance du dispositif de serveur (3) ; et
- déterminer des informations de comptage d'événements à partir de la première valeur de comptage, les informations de comptage d'événements étant indicatives d'une fréquence d'événements de demande des données de demande.

8. Programme informatique comprenant des instructions qui, lorsque le programme est exécuté par un ordinateur, amènent l'ordinateur à exécuter le procédé selon une des revendications 1 à 6.
